# EUROPEAN PATENT APPLICATION

(11) **EP 3 070 287 A1**
(43) Date of publication of application: **21.09.2016**
(21) Application number: 16160724.7
(22) Date of filing: 16.03.2016
(51) Int. Cl.: F01N 13/08

(54) **EXHAUST DEVICE OF CONSTRUCTION MACHINE**

(30) Priority: 20.03.2015 JP 2015058510
(71) Applicant: Caterpillar SARL, 1208 Geneva (CH)
(72) Inventor: HATAZAKI, Tatsuya, Tokyo, 1588530 (JP); KIMISHIMA, Takeshi, Tokyo, 1588530 (JP); KUMAGAI, Shota, Tokyo, 1588530 (JP); YAMAUCHI, Yuki, Tokyo, 1588530 (JP); KANAGAWA, Yuichiro, Tokyo, 1588530 (JP)
(74) Representative: Schmidbauer, Andreas Konrad

(57) **Abstract**

Object of the Invention

This invention relates to an exhaust device for a construction machine which can reduce temperature of exhaust gas which is discharged to the outside of the machine.

Outline of the Invention

With reference to Fig. 1, the device (50) comprises a diesel particulate filter (52) which has a cylindrical outlet (62) at the exhaust downstream end and an exhaust duct (54) which is disposed on the exhaust downstream side of the cylindrical outlet (62).

The duct (54) has a first outlet opening (76) which is formed on the one side along the width, a second outlet opening (78) which is formed on the other side along the width and an inlet opening (84) which is formed between the first and second outlet opening (76, 78).

The duct (54) defines an exhaust gas passage from the inlet opening (84) to the first and second outlet opening (76, 78).

A cross-section of the exhaust passage is larger than the cross-section of the cylindrical outlet (62).

## Description

### [Technical Field]

The present invention relates to an exhaust device of a construction machine, the exhaust device including: an exhaust-gas purifying member having, in an exhaust downstream end thereof, an exhaust port; and an exhaust passage member disposed on an exhaust downstream side of the exhaust port.

### [Background Art]

A wheel loader, which is a representative example of a construction machine for loading, includes a front vehicle body and a rear vehicle body bendably coupled via coupling pins. A work arm device is turnably connected to the front side of the front vehicle body. Left and right pairs of front wheels and rear wheels are respectively rotatably connected to the front vehicle body and the rear vehicle body. The rear vehicle body includes an operator's cab on which an operator rides, a device housing chamber in which various devices are housed, and a counterweight that balances weight with respect to the work arm device. An engine is housed in the device housing chamber. An exhaust passage of the engine extends from an engine rear end side to a rear vehicle body rear end passing through an opening formed in the counterweight (see, for example, Patent Literature 1).

### [Citation List]

### [Patent Literature]

[PTL 1] Japanese Patent Application Laid-Open No. 2009-19348

### [Summary of Invention]

### [Technical Problem]

Incidentally, as the engine of the wheel loader, in general, a diesel engine is adopted. Since a large amount of particulate matters (PM) and the like are included in exhaust gas of the diesel engine, many wheel loaders are targets of the exhaust gas regulation. It is requested to reduce the amount of particulate matters in the exhaust gas. Therefore, an exhaust-gas purifying member including a particulate-matter removing filter (Diesel Particulate Filter: DPF) is sometimes mounted on the wheel loader. The particulate-matter removing filter collects particulate matters in exhaust gas and burns and removes the collected particulate matters. Therefore, the temperature of the exhaust gas discharged from the exhaust-gas purifying member is high. The exhaust-gas purifying member is disposed on an exhaust downstream side of the engine. In the case of a small-sized model, since a dimension from an engine to a rear vehicle body rear end is small, a dimension from an exhaust port of an exhaust-gas purifying member to the outside of the vehicle is also small. Therefore, in the case of the small-sized model, if the engine is operating during maintenance or the like, it is likely that hot exhaust gas hits the feet or the like of a worker.

The present invention has been devised in view of the fact and a main technical problem of the present invention is to provide an exhaust device of a construction machine in which the temperature of exhaust gas discharged to the outside of the vehicle is reduced.

### [Solution to Problem]

According to the present invention, as an exhaust device of a construction machine for solving the technical problem, there is provided an exhaust device of a construction machine, this exhaust device including: an exhaust-gas purifying member having, in an exhaust downstream end thereof, a cylindrical exhaust port; and an exhaust passage member disposed on an exhaust downstream side of the exhaust port. The exhaust passage member includes a first outlet opening formed at a width-direction one side end portion and a second outlet opening formed at a width-direction other side end portion, as well as an inlet opening formed between the first outlet opening and the second outlet opening in a width direction, and defines an exhaust passage leading from the inlet opening to the first outlet opening and the second outlet opening. A sectional area of the exhaust passage is formed larger than a sectional area of the exhaust port.

Preferably, it is convenient that an opening area of the first outlet opening and an opening area of the second outlet opening are formed larger than the sectional area of the exhaust port, the exhaust passage member includes an upper surface plate and a lower surface plate disposed at an interval in a vertical direction, the inlet opening is formed in the upper surface plate, and the first outlet opening and the second outlet opening are formed in the lower surface plate. It is suitable that a cylindrical projection projecting from a circumferential edge of the inlet opening is provided in the upper surface plate, a downstream end of the exhaust port is inserted into the projection, and a gap is present between an inner circumferential surface of the projection and an outer circumferential surface of the exhaust port. It is preferable that the first outlet opening and the second outlet opening are configured from a large number of small holes.flow speed

### [Advantageous Effects of Invention]

In the exhaust device of the construction machine provided by the present invention, the exhaust passage member defines the exhaust passage leading from the inlet opening to the outlet openings. The sectional area of the exhaust passage is formed larger than the sectional area of the exhaust port of the discharge-gas purifying member. Therefore, the flow speed of the exhaust gas in the exhaust passage member is reduced to be lower than the flow speed of the exhaust gas in the exhaust port. Therefore, in the exhaust passage member, the heat of the exhaust gas is radiated and the temperature of the exhaust gas in the exhaust passage member is reduced to be lower than the temperature of the exhaust gas in the exhaust port. The exhaust gas having the reduced temperature is discharged from the outlet openings to the outside of the vehicle.

### [Brief Description of Drawings]

[Fig. 1]

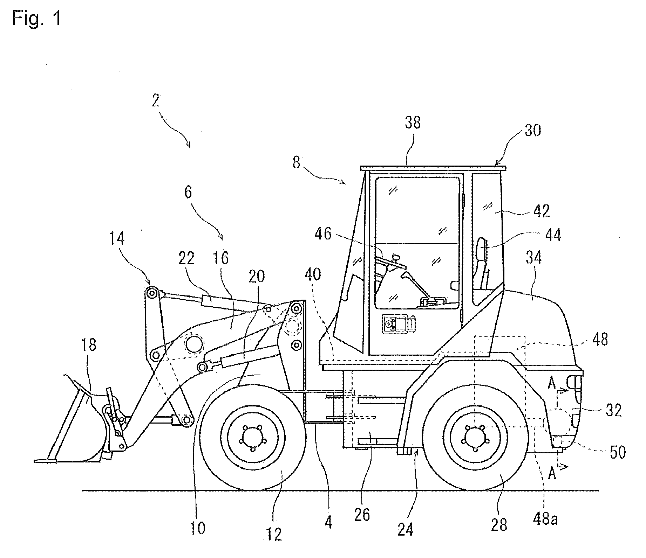

   Fig. 1 is a side view of a wheel loader including an exhaust device configured according to the present invention.
[Fig. 2]

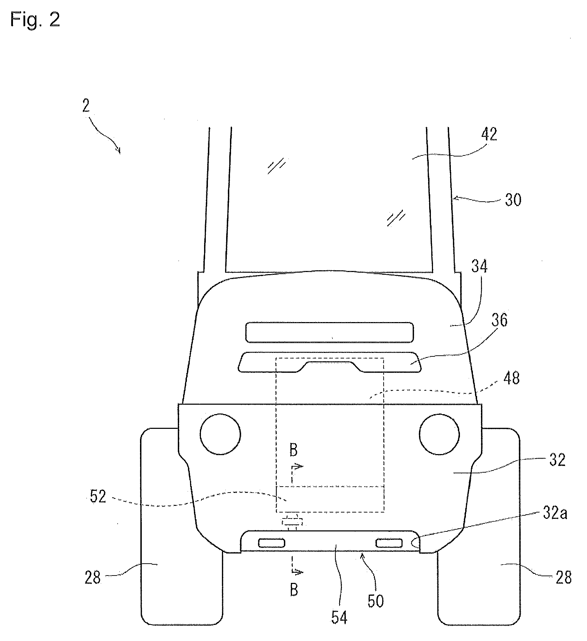

   Fig. 2 is a rear view of the wheel loader shown in Fig. 1
[Fig. 3]

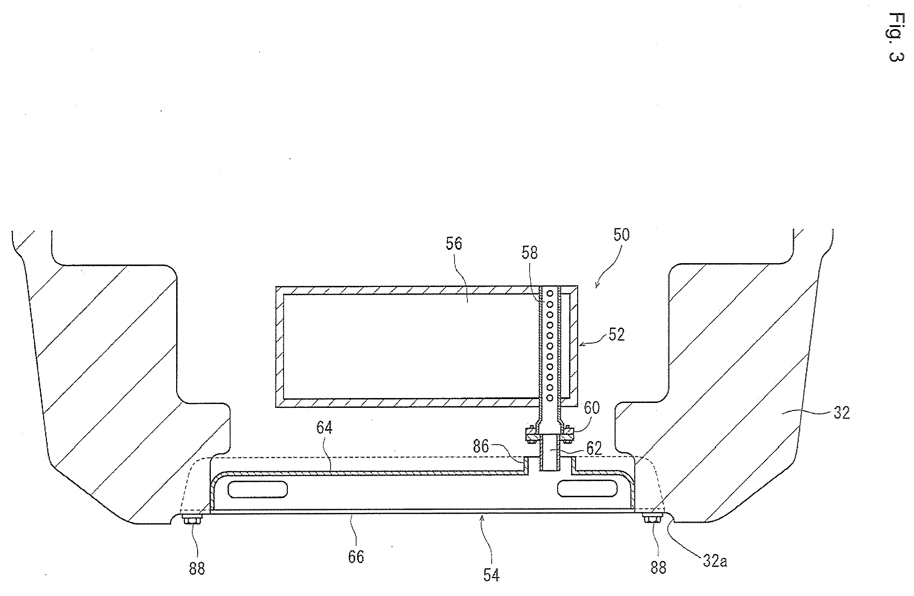

   Fig. 3 is a sectional view viewed from an A-A direction in Fig. 1.
[Fig. 4]

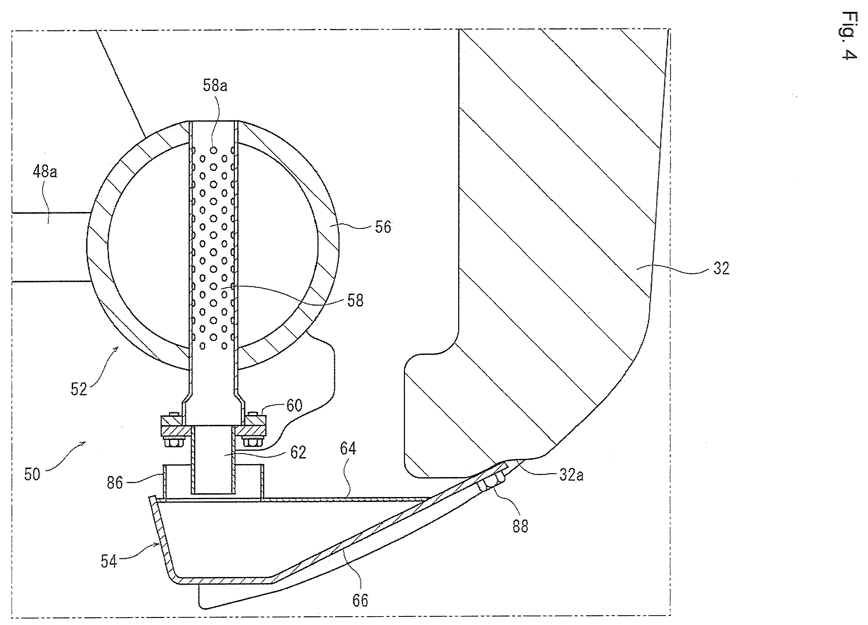

   Fig. 4 is a sectional view viewed from a B-B direction in Fig. 2.
[Fig. 5]

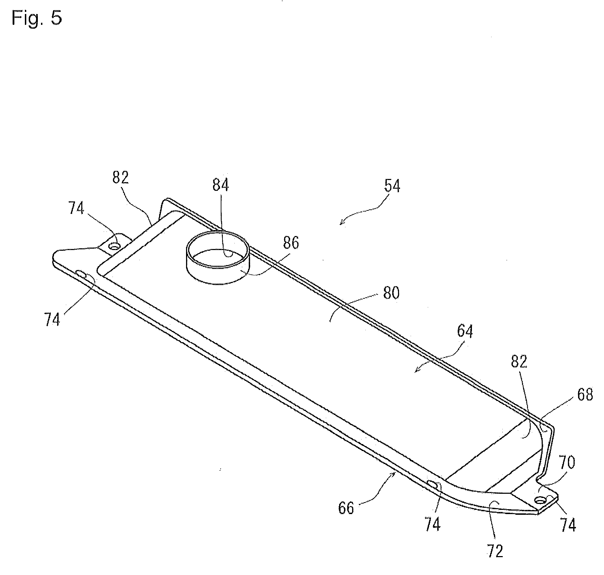

   Fig. 5 is a perspective view of an exhaust passage member.
[Fig. 6]

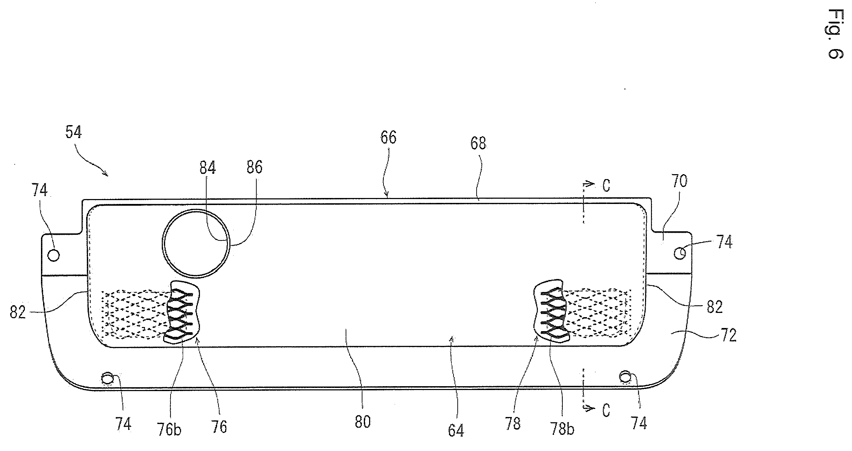

   Fig. 6 is a plan view of the exhaust passage member.
[Fig. 7]

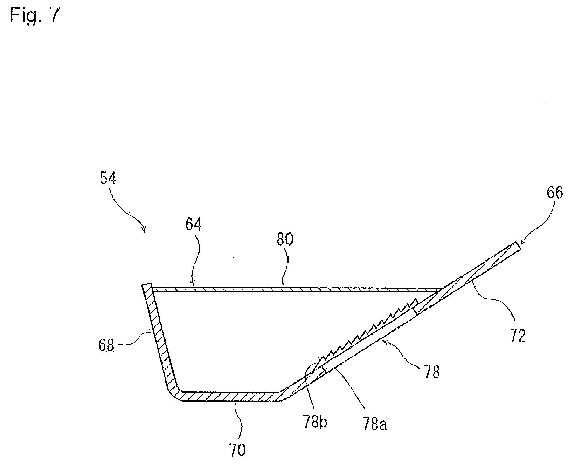

   Fig. 7 is a sectional view viewed from a C-C direction in Fig. 6.

### [Description of Embodiments]

An embodiment of an exhaust device of a construction machine according to the present invention is explained in detail below with reference to the accompanying drawings using a wheel loader, which is a representative construction machine for loading, as an example.

Explanation is provided with reference to Fig. 1 and Fig. 2. The wheel loader, the entirety of which is denoted by reference numeral 2, includes a front vehicle body 6 and a rear vehicle body 8 bendably coupled in the width direction via a coupling mechanism 4 including coupling pins extending in the vertical direction. The front vehicle body 6 includes a front frame 10 that forms a framework structure. A left and right pair of front wheels 12 (only the left side is shown in the figure) is respectively rotatably connected to the width direction outer sides of the front frame 10. A work arm device 14 is turnably connected to the front frame 10. The work arm device 14 includes a lift arm 16 turnably connected to the upper end of the front frame 10, a work tool 18 turnably connected to the distal end of the lift arm 16, a lift arm cylinder 20 that turns the lift arm 16, and a work tool cylinder 22 that turns the work tool 18.

The rear vehicle body 8 includes a rear frame 24 that forms a framework structure. The rear frame 24 includes a left and right pair of longitudinal plates 26 (only the left side is shown) disposed at an interval in the width direction and extending in the front-back direction. A left and right pair of rear wheels 28 is respectively rotatably connected to the width direction outer side of the longitudinal plates 26. An operator's cab 30 on which an operator rides is mounted at the upper ends of the longitudinal plates 26. A counter weight 32 that balances weight with respect to the work arm device 14 is connected to the rear ends of the longitudinal plates 26. A recessed place 32a extending in the width direction is formed on the lower surface of the counterweight 32. A cover member 34 is openably and closably disposed above the counterweight 32. A device housing chamber 36, in which various devices are housed, is defined by the lower surface of the operator's cab 30 and the inner surfaces of the longitudinal plates 26, the inner surface of the counterweight 32, and the inner surface of the cover member 34.

The upper surface and the lower surface of the operator's cab 30 are covered by an upper surface wall 38 and a lower surface wall 40 formed of an appropriate metal material, for example, a steel material. The front surface, the rear surface, and both the side surfaces of the operator's cab 30 are covered by window glass 42 and the like. The operator's cab 30 is formed in a box shape as a whole. In the operator's cab 30, a seat 44 on which an operator is seated, an operation device 46 for operating the coupling mechanism 4 and the like, a display device (not shown in the figure) that displays machine information and the like necessary for the operator, and the like are disposed.

In the device housing chamber 36, a diesel engine 48 forming a power source, a hydraulic pump (not shown in the figure) driven by the engine 48, an exhaust device 50 for purifying and cooling exhaust gas of the engine 48 and discharging the exhaust gas to the outside of the vehicle, a fuel tank (not shown in the figure) for storing fuel, and a hydraulic oil tank (not shown in the figure) for storing hydraulic oil, and the like are housed.

Explanation is provided with reference to Fig. 3 and Fig. 4. The exhaust device 50 includes an exhaust-gas purifying member 52 disposed on an exhaust downstream side of the engine 48 and an exhaust passage member 54 disposed on the exhaust downstream side of the exhaust-gas purifying member 52. The exhaust-gas purifying member 52 includes a cylindrical casing 56 extending in the width direction. A width-direction one side end portion of the casing 56 is connected to an exhaust pipe 48a of the engine 48. The exhaust gas discharged from the engine 48 flows from a width direction one side to a width direction other side in the casing 56. At a width-direction other side end portion of the casing 56, a cylindrical particulate-matter removing filter 58 extending in the vertical direction is disposed. The upper end side of the filter 58 is located in the casing 56. A large number of through-openings 58a extending in the radial direction are formed on the outer circumferential surface of the filter 58. The lower end side of the filter 58 projects downward from the outer circumferential surface of the casing 56. A cylindrical exhaust port 62 is connected to the lower end of filter 58 via a flange 60. The filter 58 collects particulate matters in the exhaust gas discharged from the engine 48 and burns and removes the collected particulate matters to thereby purify the exhaust gas discharged from the engine 48.

The exhaust passage member 54 includes an upper surface plate 64 and a lower surface plate 66 disposed at an interval in the vertical direction and extending in the width direction. The exhaust passage member 54 is formed in a square cylindrical shape as a whole. The upper surface plate 64 and the lower surface plate 66 are formed of an appropriate metal material, for example, a steel material and joined to each other by welding. The lower surface plate 66 is formed in a trapezoidal shape in side view as shown in Fig. 7. The lower surface plate 66 includes a front section 68 extending to incline downward from the front end toward the back, an intermediate section 70 extending substantially horizontally from the lower end of the front section 68 toward the back, and a rear section 72 extending to incline upward from the rear end of the intermediate section 70 toward the back. As shown in Fig. 5 and Fig. 6, the intermediate section 70 and the rear section 72 are widened more than the front section 68. Bolt holes 74 are formed on the outer edge side of the intermediate section 70 and the rear section 72. In the rear section 72, a first outlet opening 76 is formed at a width-direction one side end portion and a second outlet opening 78 is formed at a width-direction other side end portion. The outlet openings 76 and 78 are configured from a large number of small holes. In the embodiment shown in the figures, expand metals 76b and 78b are attached to square openings 76a and 78a formed in the rear section 72. The outlet openings 76 and 78 are meshes of the expand metals 76b and 78b. The expand metals 76b and 78b are formed of a steel material or the like and joined to the inner surface of the rear section 72 by welding. The opening areas of the outlet openings 76 and 78 are formed larger than the sectional area of the exhaust port 62 of the exhaust-gas purifying member 52. Note that the sectional area of the exhaust port 62 in this specification means the area of a surface that traverses a flowing direction of the exhaust gas. The same applies to the sectional area of an exhaust passage explained below.

The upper surface plate 64 includes a center section 80 extending substantially horizontally between the upper end side of the front section 68 of the lower surface plate 66 and the upper end side of the rear section 72 of the lower surface plate 66 and left and right side sections 82 extending downward respectively from width-direction both side end portions of the center section 80. In the center section 80, a circular inlet opening 84 located between the first outlet opening 76 and the second outlet opening 78 in the width direction is formed. On the upper surface of the center section 80, a cylindrical projection 86 projecting upward from the circumferential edge of the inlet opening 84 is attached. The projection 86 is formed of a steel material or the like and joined to the upper surface of the center section 80 by welding. As shown in Fig. 3 and Fig. 4, the downstream end of the exhaust port 62 of the exhaust-gas purifying member 52 is inserted into the projection 86. A gap is present between the inner circumferential surface of the projection 86 and the outer circumferential surface of the exhaust port 62.

In the exhaust passage member 54, an exhaust passage leading from the inlet opening 84 to the outlet openings 76 and 78 is defined by the upper surface plate 64 and the lower surface plate 66. The sectional area of the exhaust passage is formed larger than the sectional area of the exhaust port 62 of the exhaust-gas purifying member 52. The exhaust passage member 54 is fixed to the recessed place 32a of the counterweight 32 by bolts 88 as shown in Fig. 3 and Fig. 4.

Action of the exhaust device of the construction machine shown in Fig. 1 to Fig. 7 explained above is explained. In the exhaust device 50, the exhaust passage member 54 defines the exhaust passage leading from the inlet opening 84 to the outlet openings 76 and 78. The sectional area of the exhaust passage is formed larger than the sectional area of the exhaust port 62 of the exhaust-gas purifying member 52. Therefore, the flow speed of the exhaust gas in the exhaust passage member 54 is reduced to be lower than the flow speed of the exhaust gas in the exhaust port 62. Therefore, in the exhaust passage member 54, the heat of the exhaust gas is radiated. The temperature of the exhaust gas in the exhaust passage member 54 is reduced to be lower than the temperature of the exhaust gas in the exhaust port 62. The exhaust gas having the reduced temperature is discharged from the outlet openings 76 and 78 to the outside of the vehicle.

In the exhaust device 50, the opening areas of the outlet openings 76 and 78 are also formed larger than the sectional area of the exhaust port 62. Therefore, the flow speed of the exhaust gas in the outlet openings 76 and 78 is also reduced to be lower than the flow speed of the exhaust gas in the exhaust port 62. As a result, the exhaust gas discharged to the outside of the vehicle is easily mixed with the outside air. The temperature of the exhaust gas is further reduced.

Further, in the exhaust device 50, the cylindrical proj ection 86 proj ecting from the circumferential edge of the inlet opening 84 is attached to the upper surface plate 64 of the exhaust passage member 54. The downstream end of the exhaust port 62 of the exhaust-gas purifying member 52 is inserted into the projection 86. The gap is present between the inner circumferential surface of the projection 86 and the outer circumferential surface of the exhaust port 62. Therefore, the pressure in the gap drops according to inflow of the exhaust gas into the exhaust passage member 54 from the exhaust port 62. The outside air flows into the exhaust passage member 54 from the gap. Therefore, the temperature of the exhaust gas is reduced in the exhaust passage member 54.

Besides, in the exhaust device 50, the outlet openings 76 and 78 are configured from the meshes of the expand metals 76b and 78b. Therefore, even when the opening areas of the outlet openings 76 and 78 are formed relatively large, small animals are prevented from intruding into the exhaust passage member 54 from the outside of the vehicle through the outlet openings 76 and 78.

Note that, in the example explained above, the exhaust passage member is formed in the square cylindrical shape. However, the exhaust passage member may be formed in a cylindrical shape. Alternatively, instead of the independent exhaust passage member, an exhaust passage piercing through the counterweight may be formed in the counterweight. Concerning the outlet openings, in the example explained above, the expand metals are attached to the square openings formed in the lower surface plate. However, punching metals having a large number of circular or square small holes formed therein may be attached to the square openings. Alternatively, a large number of small holes may be formed in the lower plate itself.

### [Reference Signs List]

2: wheel loader (construction machine)
50: exhaust device
52: exhaust-gas purifying member
54: exhaust passage member
62: exhaust port
64: upper surface plate
66: lower surface plate
76: first outlet opening
78: second outlet opening
84: inlet opening
86: cylindrical projection

## Claims

1. An exhaust device of a construction machine, the exhaust device comprising:
an exhaust-gas purifying member having, in an exhaust downstream end thereof, a cylindrical exhaust port; and
an exhaust passage member disposed on an exhaust downstream side of the exhaust port, wherein
the exhaust passage member includes a first outlet opening formed at a width-direction one side end portion and a second outlet opening formed at a width-direction other side end portion, a s well as an inlet opening formed between the first outlet opening and the second outlet opening in a width direction, and defines an exhaust passage leading from the inlet opening to the first outlet opening and the second outlet opening, and
a sectional area of the exhaust passage is formed larger than a sectional area of the exhaust port.

2. The exhaust device of a construction machine according to claim 1, wherein an opening area of the first outlet opening and an opening area of the second outlet opening are formed larger than the sectional area of the exhaust port.

3. The exhaust device of a construction machine according to claim 1 or 2, wherein the exhaust passage member includes an upper surface plate and a lower surface plate disposed at an interval in vertical direction, the inlet opening is formed in the upper surface plate, and the first outlet opening and the second outlet opening are formed in the lower surface plate.

4. The exhaust device of a construction machine according to claim 3, wherein a cylindrical projection projecting from a circumferential edge of the inlet opening is attached to the upper surface plate, a downstream end of the exhaust port is inserted into the projection, and a gap is present between an inner circumferential surface of the projection and an outer circumferential surface of the exhaust port.

5. The exhaust device of a construction machine according to any one of claims 1 to 4, wherein the first outlet opening and the second outlet opening are configured from a large number of small holes.
